(19) Europäisches Patentamt / European Patent Office / Office européen des brevets

(11) **EP 4 506 723 A1**

(12) **EUROPEAN PATENT APPLICATION**

(43) Date of publication:
12.02.2025 Bulletin 2025/07

(21) Application number: 24188513.6

(22) Date of filing: 15.07.2024

(51) International Patent Classification (IPC):
*G01S 7/497* (2006.01)   *G01S 17/931* (2020.01)

(52) Cooperative Patent Classification (CPC):
G01S 7/4972; G01S 17/931

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.08.2023 CN 202310987329

(71) Applicant: Robert Bosch GmbH
70442 Stuttgart (DE)

(72) Inventors:
• KONG, Daqing
  Shanghai, 200335 (CN)
• WANG, Su
  Shanghai, 200335 (CN)
• SHEN, Tunan
  Shanghai, 200335 (CN)

(74) Representative: Isarpatent
Patent- und Rechtsanwälte
Barth Hassa Peckmann & Partner mbB
Friedrichstraße 31
80801 München (DE)

(54) **CALIBRATION METHOD AND APPARATUS FOR LIDAR AND STORAGE MEDIUM**

(57)   The present disclosure proposes a calibration method for a LIDAR, wherein the calibration method includes the following steps: S11, obtaining point cloud data regarding the point cloud detected by the LIDAR for the calibration board, wherein the main plane of the calibration board has a calibration pattern and faces the LIDAR; S12, based on the point cloud data, determining the initial pose information of the calibration board in the LIDAR coordinate system; S13, using the calibration pattern and the intensity information of the point cloud data to correct the initial pose information, so as to determine a first transformation matrix between the LIDAR coordinate system and the calibration board coordinate system, and based on the first transformation matrix, determining the calibration parameters for the LIDAR. A corresponding calibration apparatus and computer-readable storage medium are also proposed. By means of the present disclosure, accurate calibration of the LIDAR can be achieved.

FIG. 1

## Description

## Technical Field

The present disclosure relates to a calibration method for LIDAR, a calibration apparatus for LIDAR, and a computer-readable storage medium.

## Background Art

LIDAR is widely used in fields such as autonomous driving, 3D reconstruction, navigation, and target detection. Through LIDAR, three-dimensional spatial information of the detected object can be obtained. During the use of LIDAR, it is usually necessary to calibrate the LIDAR. However, existing calibration methods have issues such as inconvenience in operation, inaccuracy, or lack of robustness.

For example, key features used for calibration can be selected from the point cloud data detected by LIDAR, and calibration can be achieved based on the positional information of the detected key features and the prior knowledge of these key features. The calibration results obtained in this manner are difficult to ensure accuracy. For example, the detection of key features may have errors due to the resolution of the LIDAR. Additionally, it is known that an operator can select key features used for calibration from the point cloud data detected by LIDAR to achieve calibration. This manual operation makes the calibration process complex and time-consuming, and the accuracy of the calibration results depends on the operator's experience.

Therefore, it is desirable to provide an improved calibration method for LIDAR.

## Summary of the Invention

The objective of the present disclosure is to provide an improved calibration method for LIDAR to achieve accurate calibration.

According to a first aspect of the present disclosure, a calibration method for LIDAR is provided, wherein the calibration method includes the following steps: S11, obtaining point cloud data regarding the point cloud detected by the LIDAR for the calibration board, wherein the main plane of the calibration board has a calibration pattern and faces the LIDAR; S12, based on the point cloud data, determining the initial pose information of the calibration board in the LIDAR coordinate system; S13, using the calibration pattern and the intensity information of the point cloud data to correct the initial pose information, so as to determine a first transformation matrix between the LIDAR coordinate system and the calibration board coordinate system, and based on the first transformation matrix, determining the calibration parameters for the LIDAR.

By utilizing the calibration pattern and the intensity information of the point cloud data to correct the initial pose information, the accuracy of the calibration results can be improved. The intensity information reflects the reflectivity of the scanned target object. By comparing the intensity information of the point cloud data with the scanned calibration pattern, the initial pose information can be corrected, thereby enhancing the accuracy of the calibration. In particular, it enables accurate calibration of the LIDAR in a convenient manner, where the calibration process can be automatically executed with the aid of a calibration apparatus, thereby at least reducing, or even eliminating, the manual operations by the operator during the calibration process, such as the operation of selecting features for calibration by the operator. By correcting the initial pose information using the intensity information and the calibration pattern, such a highly automated calibration can still achieve high accuracy calibration parameters.

According to an exemplary example of the present disclosure, step S13 may include: S131, projecting the point cloud representing the calibration board along the main direction perpendicular to the main plane of the calibration board as determined by the initial pose information using the intensity information of the point cloud data, so as to generate a projection image; and S132, performing image matching between the projection image and the template image of the calibration pattern and correcting the initial pose information based on the matching result of the image matching, so as to determine the first transformation matrix between the LIDAR coordinate system and the calibration board coordinate system.

The generated projection image can reflect the intensity information of the point cloud data. During the image matching process, performing image matching between the overall projection image of the calibration board and the template image can fully utilize a large amount of point cloud representing the calibration board, rather than relying solely on a small amount of point cloud associated with key features. The result of the image matching is substantially unaffected by the resolution of the LIDAR and can fully utilize the intensity information of the point cloud data. Thus, the calibration method can be made more robust and easier to implement.

According to an exemplary example of the present disclosure, in step S132, image matching between the projection image and the template image of the calibration pattern is performed using at least one of the following methods:

performing image matching between the projection image and the template image of the calibration pattern using the normalized cross-correlation matching method; and/or matching at least two image portions with different grayscale values in the projection image and the template image respectively to determine at least two sub-correlation coefficients corresponding to the projection image and the at least two image portions, and determining a correlation coefficient representing the matching degree between the projection image and the template image based on the at least two sub-correlation coefficients; and/or rotating the template image within its image plane, performing image matching between the projection image and the rotated template image to determine the rotation angle of the template image that has the highest matching degree with the projection image, and determining the relative pose between the projection image and the template image based on the rotation angle.

According to an exemplary example of the present disclosure, in step S11, the initial point cloud detected by the LIDAR can be segmented to obtain at least one candidate point cloud cluster, and a target point cloud cluster corresponding to the calibration board can be selected from the at least one candidate point cloud cluster. Optionally, the point cloud points in each candidate point cloud cluster can be divided into at least two groups according to intensity information, and the target point cloud cluster can be selected based on the ratio of the number of point cloud points in the at least two groups. Alternatively or additionally, the target point cloud cluster can be selected based on the ratio of the dimensions of the bounding box of each candidate point cloud cluster along at least two different directions.

According to a second aspect of the present disclosure, a calibration apparatus for LIDAR is provided, wherein the calibration apparatus includes: - One or more processors; and a memory storing computer program instructions, wherein the computer program instructions, when executed by the one or more processors, enable the one or more processors to perform the calibration method according to the present disclosure.

According to a third aspect of the present disclosure, a computer-readable storage medium is provided, storing computer program instructions, wherein the computer program instructions, when executed by one or more processors, enable the one or more processors to perform the calibration method according to the present disclosure.

## Description of Accompanying Drawings

In the following, the present disclosure is described in greater detail with reference to the accompanying drawings to provide a better understanding of its principles, features, and advantages. The accompanying drawings include the following:

FIG. 1 schematically illustrates a scenario of calibration using the calibration method according to an exemplary example of the present disclosure;
FIG. 2 schematically illustrates a flowchart of the calibration method for LIDAR according to an exemplary example of the present disclosure;
FIG. 3 schematically illustrates a flowchart of step S11 in the calibration method according to an exemplary example of the present disclosure;
FIG. 4 schematically illustrates the point cloud included in the initial point cloud data obtained through step S11 in the calibration method according to an exemplary example of the present disclosure;
FIG. 5 schematically illustrates the candidate point cloud clusters obtained through step S11 in the calibration method according to an exemplary example of the present disclosure;
FIG. 6 schematically illustrates step S12 in the calibration method according to an exemplary example of the present disclosure;
FIGS. 7 and 8 schematically illustrate step S13 in the calibration method according to an exemplary example of the present disclosure;
FIG. 9 schematically illustrates a scenario of calibration using the calibration method according to an exemplary example of the present disclosure; and
FIG. 10 schematically illustrates a flowchart of the calibration method for LIDAR according to an exemplary example of the present disclosure.

List of appended drawings:

1      LiDAR
2      Calibration board
20     Point cloud representing the calibration board
21     Calibration pattern
3      Calibration device

| 31 | Processor |
|---|---|
| 32 | Memory |
| 4 | Additional sensor |
| 101 | Candidate point cloud cluster |
| 102 | Target point cloud cluster |
| 103 | Oriented bounding box (OBB) of calibration board |
| 104 | Projection image |
| 105 | Template image |
| 106 | Rotated template image |
| 107 | First image portion |
| 108 | Second image portion |

**Specific Embodiments**

To provide a clearer understanding of the technical problems, technical solutions, and beneficial technical effects to be addressed by the present disclosure, the following detailed description of the present disclosure will be provided with reference to the accompanying drawings and multiple exemplary examples. It should be understood that the specific examples described herein are provided solely for the purpose of explaining the present disclosure and not for limiting the scope of protection of the present disclosure.

It should be understood that in this document, terms such as "first," "second," etc., are used for descriptive purposes only and should not be construed as indicating or implying relative importance. Furthermore, such terms should not be understood as implying a specific quantity of the indicated technical features. Features described with "first," "second," etc., can explicitly or implicitly represent the inclusion of at least one of that feature. Herein, the meaning of "multiple" is at least two, such as two, three, etc., unless otherwise specifically limited.

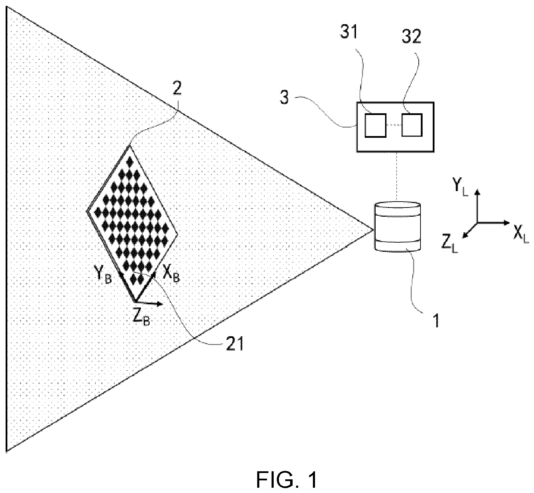

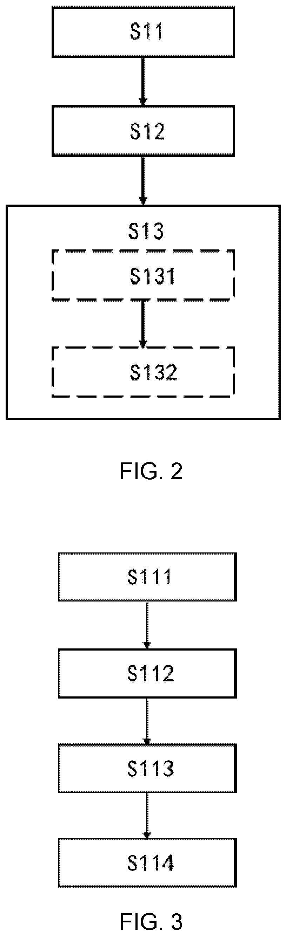

FIG. 1 schematically illustrates a scenario of calibration using the calibration method according to an exemplary example of the present disclosure. FIG. 2 schematically illustrates a flowchart of the calibration method for LIDAR 1 according to an exemplary example of the present disclosure. The LIDAR 1 can be installed on various devices such as vehicles or road testing equipment. Vehicles may include vehicles for transporting goods or passengers, such as motor vehicles, rail vehicles, ships, aircraft, etc. Road testing equipment may include road lights, signs, or other specialized roadside detection equipment.

As shown in Figure 1, to calibrate the LIDAR 1, a calibration board 2 is placed within the field of view of the LIDAR 1. The main plane of the calibration board 2 has a calibration pattern 21 and faces the LIDAR 1, allowing the LIDAR 1 to detect the calibration board 2 and its calibration pattern 21. In this case, the main plane of the calibration board 2 faces the LIDAR 1, but it does not necessarily have to be perpendicular to the main viewing direction of the LIDAR 1. In the example shown in Figure 1, the calibration pattern 21 is a black-and-white checkerboard pattern. It should be understood that the calibration pattern 21 can also be implemented in other forms. For example, the calibration pattern 21 may include geometric patterns such as triangles, trapezoids, rectangles, circles, or more complex shapes.

Subsequently, the LIDAR 1 can detect the calibration board 2 and obtain the corresponding point cloud data. The point cloud data obtained by the LIDAR 1 can be transmitted to a calibration apparatus 3 for the LIDAR 1. The calibration apparatus 3 is configured to communicate with the LIDAR 1 to facilitate the transmission of data and/or control commands. The point cloud data obtained by the LIDAR 1 can also be transferred to the calibration apparatus 3 via a data carrier. The calibration apparatus 3 comprises: One or more processors 31; and a memory 32 storing computer program instructions, wherein the computer program instructions, when executed by the one or more processors 31, enable the one or more processors 31 to perform the calibration method according to the present disclosure.

As shown in FIG. 2, the calibration method at least includes steps S11, S12, and S13.

First, in step S11, point cloud data regarding the point cloud detected by the LIDAR 1 for the calibration board 2 is obtained. The point cloud data detected by the LIDAR 1 includes not only the coordinate information of each point in the point cloud but also the intensity information of each point.

Then, in step S12, based on the point cloud data, the initial pose information of the calibration board 2 in the LIDAR coordinate system is determined.

In step S13, the initial pose information is corrected using the calibration pattern 21 and the intensity information of the point cloud data to determine the first transformation matrix between the LIDAR coordinate system and the calibration board coordinate system, and based on the first transformation matrix, the calibration parameters for the LIDAR 1 are determined. The first transformation matrix may include information about the first rotation matrix and the first translation vector. For example, the first transformation matrix can be directly used as the calibration parameters for the LIDAR 1 to calibrate the LIDAR 1.

Thus, accurate calibration of the LIDAR 1 can be achieved in a convenient manner. The calibration process can be automatically executed with the aid of a calibration apparatus 3, thereby at least reducing, or even eliminating, the manual operations by the operator during the calibration process, such as the operation of selecting features for calibration by the operator. By correcting the initial pose information using the intensity information and the calibration pattern 21, such a highly automated calibration can still achieve high accuracy calibration parameters.

Typically, the resolution of the LIDAR 1 is limited, especially in the vertical direction. For example, if the vertical angular resolution of the LIDAR 1 is 1°, and the calibration board 2 is 5 meters away from the LIDAR 1, the detection accuracy of the calibration board 2 by the LIDAR 1 in the vertical direction will be greater than 5 centimeters. The sparsity of the point cloud measured by the LIDAR 1 will affect the accuracy of the calibration. Existing calibration methods generally rely on the positional information of the point cloud data and the geometric features of the calibration board 2 to achieve calibration. However, it is often difficult to ensure the accuracy of the calibration. In existing calibration methods, additional manual operations can be used to achieve calibration to improve accuracy. For example, the operator may select key features for calibration from the point cloud data detected by the LIDAR 1, such as selecting corner points on the calibration board 2 from the point cloud data. Such manual operations can improve calibration accuracy to some extent but also make the calibration process more complex and time-consuming, and dependent on the operator's experience. Additionally, during the process of calibrating the LIDAR 1 based on key features, if the detection data representing the key features itself has low accuracy, the obtained calibration results are often inaccurate. Especially, the measurement results of such key features may be inaccurate due to the resolution of the LIDAR 1. Therefore, even with manual operations, the accuracy of the calibration results cannot be ensured.

According to the present disclosure, after determining the initial pose information of the calibration board 2 in the LIDAR coordinate system, the initial pose information can be corrected using the calibration pattern 21 and the intensity information of the point cloud data to obtain more accurate calibration parameters. The intensity information reflects the reflectivity of the scanned target object. Especially in the case where the LIDAR 1 scans the calibration board 2, the intensity information of the point cloud representing the main plane of the calibration board 2 is highly correlated with the color of the main plane. For example, the white areas of the calibration pattern 21 have a higher reflectivity to the laser, resulting in higher echo intensity of the laser pulses scanning the white areas, and the corresponding generated point cloud will also have higher intensity. In contrast, the point cloud corresponding to the black areas of the calibration pattern 21 will have lower intensity. Therefore, by comparing the intensity information of the point cloud data with the calibration pattern 21, the initial pose information can be corrected, thereby enhancing the accuracy of the calibration.

Optionally, in step S12, the initial pose information of the calibration board 2 in the LIDAR coordinate system can be determined based on the coordinate information contained in the point cloud data, without considering the intensity information contained in the point cloud data.

The LIDAR 1 may especially be a non-repetitive scanning LIDAR. Compared to traditional repetitive scanning LIDARs, the scanning path of a non-repetitive scanning LIDAR can be non-repetitive, the laser scanning area increases over time, and the field of view coverage rate significantly improves over time. For non-repetitive scanning LIDARs, the calibration method according to an exemplary example of the present disclosure is particularly helpful in improving the accuracy of the calibration results. Especially, the point cloud data detected by the LIDAR 1 can have richer and more reliable intensity information.

FIG. 3 schematically illustrates a flowchart of step S11 in the calibration method according to an exemplary example of the present disclosure.

As shown in FIG. 3, step S11 of the calibration method may include at least one of steps S111, S112, and S113.

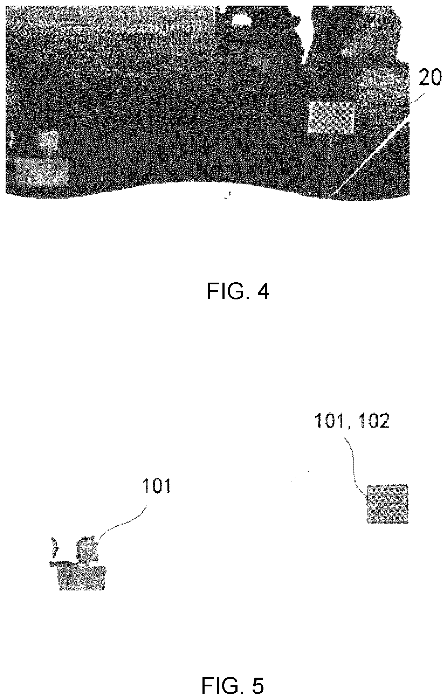

In step S111, the initial point cloud data detected by the LIDAR 1 can be obtained. FIG. 4 schematically illustrates the point cloud included in the initial point cloud data obtained through step S11 in the calibration method according to an exemplary example of the present disclosure. It can be seen that the initial point cloud data may include the point cloud 20 representing the calibration board 2 and the point cloud representing the surrounding environment of the calibration board 2. For example, in addition to the point cloud 20 representing the calibration board 2, the initial point cloud data also includes the point cloud representing the ground and the point cloud representing the interference objects.

In step S112, the point cloud representing the ground can be removed from the initial point cloud data. For example, a segmentation method based on a sampling consistency algorithm (sac-based) can be used to process the initial point cloud data to filter out the point cloud representing the ground.

In step S113, a clustering algorithm can be used to segment the initial point cloud data, especially the initial point cloud data with the ground point cloud removed, to obtain at least one candidate point cloud cluster. For example, the Euclidean clustering method can be used. It should be understood that various applicable clustering algorithms can be used for clustering in step S113, such as the DBSCAN clustering method, region growing clustering method, K-means clustering method, etc. FIG. 5 schematically illustrates the candidate point cloud clusters 101 obtained through step S11 in the calibration method according to an exemplary example of the present disclosure. In FIG. 5, two candidate point cloud clusters 101 are schematically illustrated.

Removing the point cloud representing the ground in step S112 before step S113 is particularly beneficial for improving the efficiency and accuracy of point cloud segmentation in step S113.

In step S114, a target point cloud cluster 102 can be selected from the at least one candidate point cloud cluster 101 as the point cloud cluster corresponding to the calibration board 2.

For example, the target point cloud cluster 102 can be selected based on the area occupied by the point cloud cluster. Since the size information of the calibration board 2 is known, the point cloud clusters corresponding to interference objects with sizes significantly larger or smaller than the calibration board 2 can be filtered out from the candidate point cloud clusters 101.

In an exemplary example, the target point cloud cluster 102 can be selected based on the ratio of the dimensions of the bounding box of each candidate point cloud cluster 101 along at least two different directions. Since the thickness dimension of the calibration board 2 is significantly smaller than its dimensions in the directions perpendicular to the thickness direction, this feature of the calibration board 2 can be used to select the target point cloud cluster 102.

For example, in step S11, particularly in step S114, the oriented bounding box (OBB) of each candidate point cloud cluster 101 can be obtained. The OBB can tightly enclose the point cloud contained in each candidate point cloud cluster 101. For a cuboid-shaped calibration board 2, the OBB can closely approximate the calibration board 2. The OBB of the point cloud cluster representing the calibration board 2 can precisely match the shape of the calibration board 2. Using the OBB, the point cloud cluster corresponding to the calibration board 2 can be accurately selected from the candidate point cloud clusters 101. Additionally, the OBB can also determine the initial pose information of the calibration board 2 in the LIDAR coordinate system (which will be further described below).

Optionally, the OBB of the point cloud contained in the point cloud cluster can be constructed based on the principal component analysis (PCA) method. By constructing the OBB, the three axial directions D1, D2, D3 of the OBB and the three edge lengths L1, L2, and L3 along the three axial directions can be determined, where the three axial directions D1, D2, D3 are orthogonal to each other. For a cuboid-shaped calibration board 2, the three edge lengths L1, L2, and L3 of the corresponding OBB can at least approximately represent the length, width, and thickness of the calibration board 2.

Exemplarily, the selected target point cloud cluster 102 should at least satisfy the following condition: the ratio of the minimum edge length to the maximum edge length of its OBB is less than 0.1. If L1 is the smallest and L3 is the largest among the three edge lengths L1, L2, and L3 of the OBB of the candidate point cloud cluster 101, then the candidate point cloud cluster 101 can only be selected as the target point cloud cluster 102 if L1:L3 < 0.1.

Alternatively, the selected target point cloud cluster 102 should at least satisfy the following condition: one of the three edge lengths of its OBB is less than one-tenth of the other two edge lengths. For example, in the three edge lengths L1, L2, and L3 of the OBB of the target point cloud cluster 102, L1 < 0.1*L2 and L1 < 0.1*L3.

This allows the target point cloud cluster 102 to be selected in a convenient manner.

In an exemplary example, the point cloud points in each candidate point cloud cluster 101 can be divided into at least two groups based on intensity information, and the target point cloud cluster 102 can be selected based on the ratio of the number of point cloud points in the at least two groups.

For example, in the case where the calibration pattern 21 is a checkerboard pattern, the areas of the black and white regions of the calibration board 2 are approximately equal. Accordingly, the selected target point cloud cluster 102 can be made to at least satisfy the following condition: the point cloud points in the point cloud cluster are divided into a high-intensity group and a low-intensity group according to the intensity information, and the ratio of the number of point cloud points in the high-intensity group to the low-intensity group is between 0.5 and 2. Optionally, the K-means clustering algorithm can be used to divide the point cloud in the point cloud cluster into two parts: a high-intensity group with higher intensity and a low-intensity group with lower intensity. The number of point cloud points in the high-intensity group is $N_h$, and the number of point cloud points in the low-intensity group is $N_l$. The candidate point cloud cluster 101 can only be selected as the target point cloud cluster 102 if $0.5 < N_l/N_h < 2$. This allows the selection of the target point cloud cluster 102 based on intensity information, thereby helping to eliminate interference. During the selection of the target point cloud cluster 102, considering both intensity information and size information (for example, combining the method of selecting the target point cloud cluster 102 based on the ratio of the side lengths of the OBB and the ratio of the number of point cloud points in at least two groups) can be particularly effective in eliminating interference, making the calibration method applicable to more diverse and complex scenarios.

According to the calibration pattern 21, the point cloud points in each candidate point cloud cluster 101 can also be divided into more than two groups based on intensity information. The conditions that the number of point cloud points in each group needs to meet can be determined according to the calibration pattern 21.

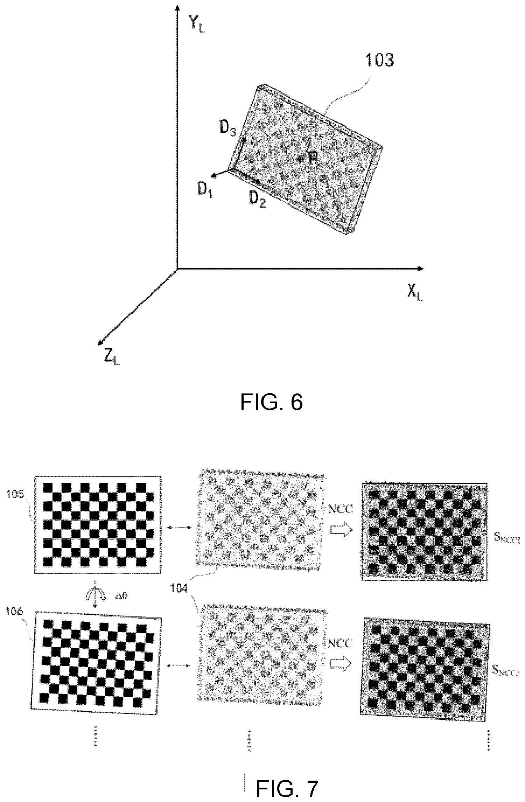

In one exemplary example, in step S12, the initial pose information of the calibration board 2 in the LIDAR coordinate system can be determined based on the oriented bounding box (OBB) of the point cloud representing the calibration board 2. The initial pose information can, for example, represent the position coordinates and direction vectors of the calibration board 2 in the LIDAR coordinate system. FIG. 6 schematically illustrates step S12 in the calibration method according to an exemplary example of the present disclosure.

For example, the OBB representing the calibration board 2 (referred to herein as the calibration board OBB 103) can be constructed based on PCA. This allows the determination of the center point coordinates P of the calibration board OBB 103, the three axial directions D1, D2, D3, and the corresponding three side lengths L1, L2, and L3 along the three axial directions. The center point coordinates and the three axial directions of the calibration board OBB 103 can represent the initial pose of the calibration board 2 in the LIDAR coordinate system. The three axial directions D1, D2, D3 of the calibration board OBB 103 can be associated with the length, width, and thickness directions of the calibration board 2 through the three side lengths L1, L2, and L3. The initial pose information of the calibration board 2 in the LIDAR coordinate system can be determined based on the center point coordinates, the three axial directions, and the three side lengths of the calibration board OBB 103.

The initial pose information determined based on the calibration board OBB 103 is determined integrally based on all the point clouds representing the calibration board 2. Compared to determining the pose of the calibration board 2 in the LIDAR coordinate system based on key features, this method has higher robustness, particularly in reducing the impact of the resolution of the LIDAR 1.

As described above, in some examples, the OBB of each candidate point cloud cluster 101 can be obtained in step S11 to select the target point cloud cluster 102. Then, in step S12, the OBB of the target point cloud cluster 102 obtained in step S11 can be further used to determine the initial pose information of the calibration board 2 in the LIDAR coordinate system.

The initial transformation relationship between the LIDAR coordinate system and the calibration board coordinate system can be roughly determined through the initial pose information, for example, the initial transformation matrix $T_{ini}$ between the LIDAR coordinate system and the calibration board coordinate system can be determined. Alternatively, the initial pose information can be directly represented as the initial transformation matrix $T_{ini}$ between the LIDAR coordinate system and the calibration board coordinate system. However, to obtain accurate calibration results, in step S13, the initial pose information can be corrected using the calibration pattern 21 and the intensity information of the point cloud data to determine the first transformation matrix between the LIDAR coordinate system and the calibration board coordinate system.

Returning to FIG. 2, in one exemplary example, step S13 may particularly include: step S131, projecting the point cloud representing the calibration board 2 along the main direction perpendicular to the main plane of the calibration board 2 as determined by the initial pose information using the intensity information of the point cloud data, so as to generate a projection image; and step S132, performing image matching between the projection image and the template image of the calibration pattern 21 and correcting the initial pose information based on the matching result of the image matching, so as to determine the first transformation matrix between the LIDAR coordinate system and the calibration board coordinate system. The template image of the calibration pattern 21 can be understood as the image that best reflects the calibration pattern 21. The template image of the calibration pattern 21 can be pre-stored in the memory 32 of the calibration apparatus 3, or it can be pre-stored in other storage devices and can be obtained by the calibration apparatus 3.

This allows the correction of the initial pose information of the calibration board 2 through image matching between the projection image of the point cloud representing the calibration board 2 and the template image, thereby obtaining more accurate calibration parameters. The generated projection image can reflect the intensity information of the point cloud data. During the image matching process, the projection image of the entire calibration board 2 is matched with the template image. This approach allows for the full utilization of a large number of point clouds representing the calibration board 2, rather than relying solely on a small number of point clouds associated with key features. The result of the image matching is substantially unaffected by the resolution of the LIDAR 1 and can fully utilize the intensity information of the point cloud data. Thus, the calibration can be made more robust and easier to implement.

Referring to FIG. 6, the OBB 103 of the calibration board has the smallest dimension L1 in the axial direction D1. It can be seen that D1 corresponds to the thickness direction of the calibration board 2, which is the main direction perpendicular to the main plane of the calibration board 2. In step S131, the point cloud representing the calibration board 2 can be projected along the direction D1 using the intensity information of the point cloud data to obtain a projection image.

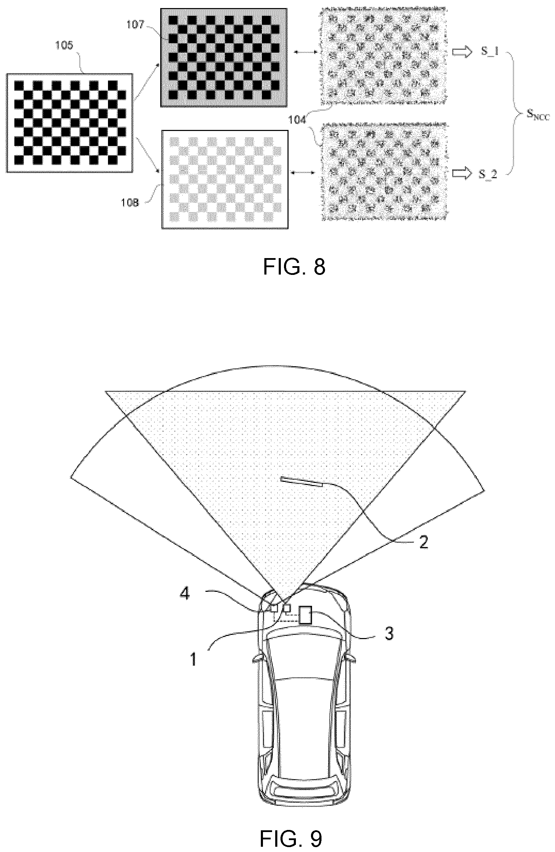

FIGS. 7 and 8 schematically illustrate step S13 in the calibration method according to an exemplary example of the present disclosure. In this example, the calibration pattern 21 is a checkerboard pattern.

Optionally, in step S131, points in the point cloud representing the calibration board 2 with lower intensity correspond to image units with lower brightness or higher grayscale values in the projection image 104, and points in the point cloud representing the calibration board 2 with higher intensity correspond to image units with higher brightness or lower grayscale values in the projection image 104. The image units may include, for example, pixels or color blocks. Exemplarily, the point with the lowest intensity in the point cloud representing the calibration board 2 can be projected as a white pixel or color block, while the point with the highest intensity in the point cloud representing the calibration board 2 can be projected as a black pixel or color block. FIG. 7 schematically shows the projection image 104 generated in an exemplary example of the present disclosure. The projection image 104 may particularly have a resolution consistent with the template image 105 of the calibration pattern 21. In the case where the LIDAR 1 is a non-repetitive scanning LIDAR, the projection image 104 may have richer and more reliable brightness/grayscale information.

Optionally, in step S132, the relative pose between the projection image 104 and the template image 105 of the calibration pattern 21 can be determined by image matching between the projection image 104 and the template image 105. For example, the normalized cross-correlation matching method (NCC) can be used to match the projection image 104 with the template image 105 of the calibration pattern 21. This allows obtaining the correlation coefficient $S_{NCC}$ between the projection image 104 and the template image 105. Typically, there may be some deviation between the projection image 104 and the initial template image 105. Optionally, the template image 105 can be rotated within its image plane, and the projection image 104 can be matched with the rotated template image 106 to determine the rotation angle of the template image 105 that has the highest matching degree with the projection image 104. The relative pose between the projection image 104 and the template image 105 can be determined based on the rotation angle.

As shown in FIG. 7, a brute force search method can be used to determine the rotation angle of the template image 105 that has the highest matching degree with the projection image 104. For example, the correlation coefficient $S_{NCC1}$ between the projection image 104 and the template image 105 can be obtained based on NCC. Then, the projection image 104 can be matched with the template image 105 rotated by $\Delta\theta$ degrees clockwise within the image plane to obtain the correlation coefficient $S_{NCC2}$ between the projection image 104 and the rotated template image 106. If $S_{NCC2} > S_{NCC1}$, it means that the template image rotated by $\Delta\theta$ degrees 106 has a higher matching degree with the projection image 104 compared to the initial template image 105. This process is repeated by rotating the template image 105 and obtaining the correlation coefficients. By comparing the correlation coefficients, the rotation angle $\theta$ of the template image 105 that has the highest matching degree with the projection image 104 can be determined.

Based on the highest matching image matching result, the positional offset of the calibration board 2 in the projection coordinate system can be further determined. For example, the positional offset of the calibration board 2 in the projection coordinate system can be determined by the following formula:

$$\begin{bmatrix} u' \\ v' \end{bmatrix} = \begin{bmatrix} \cos(\theta) & -\sin(\theta) & (1-\cos(\theta)) \cdot c_x + \sin(\theta) \cdot c_y \\ \sin(\theta) & \cos(\theta) & -\sin(\theta) \cdot c_x + (1-\cos(\theta)) \cdot c_y \end{bmatrix} \cdot \begin{bmatrix} u_{opt} \\ v_{opt} \\ 1 \end{bmatrix}$$

where $u'$ and $v'$ represent the positional offset of the calibration board 2 in the projection coordinate system, $c_x$ and $c_y$ represent the coordinates of the center point, and $u_{opt}$ and $v_{opt}$ represent the optimal pixel positions determined by NCC. $\theta$ represents the rotation angle of the template image 105 that has the highest matching degree with the projection image 104.

Then, the initial pose information can be corrected using the relative pose between the projection image 104 and the template image 105. For example, the first transformation matrix can be determined by the following formula:

$$^{L}T_b = T_{ini} \cdot \begin{bmatrix} \cos(\theta) & -\sin(\theta) & 0 & u'/s \\ \sin(\theta) & \cos(\theta) & 0 & v'/s \\ 0 & 0 & 1 & 0 \\ 0 & 0 & 0 & 1 \end{bmatrix}$$

where $T_{ini}$ represents the initial transformation matrix, $\theta$ represents the rotation angle of the template image 105 that has the highest matching degree with the projection image 104, u' and v' represent the positional offset of the calibration board 2 in the projection coordinate system, and s represents the pixel size of the template image 105.

Typically, the number of point cloud points detected by the LIDAR 1 on the main plane of the calibration board 2 is large. Therefore, in the initial pose information determined, for example, by an oriented bounding box, the main direction (thickness direction) of the calibration board 2 and the position in the main direction have higher accuracy, while the orientation of the calibration board 2 in the plane perpendicular to the main direction has relatively higher accuracy. The calibration method described above can effectively compensate for this deficiency.

In an exemplary example, to improve the accuracy of image matching, at least two image portions with different grayscale values in the projection image 104 and the template image 105 can be matched separately to determine at least two sub-correlation coefficients between the projection image 104 and the at least two image portions. Based on the at least two sub-correlation coefficients, the correlation coefficient representing the matching degree between the projection image 104 and the template image 105 can be determined. This can improve the accuracy of the correlation coefficient. For example, as shown in FIG. 8, the template image 105 may include a first image portion 107 and a second image portion 108 with different grayscale values. In this example, the first image portion 107 is the black part of the template image 105, and the second image portion 108 is the white part of the template image 105. For clarity, the blank parts of the first image portion 107 and the second image portion 108 are shown in light gray in FIG. 8. Using an image matching algorithm, such as the NCC algorithm, the sub-correlation coefficient S_1 between the projection image 104 and the first image portion 107, and the sub-correlation coefficient S_2 between the projection image 104 and the second image portion 108 can be determined. Based on the sub-correlation coefficients S_1 and S_2, the correlation coefficient representing the matching degree between the projection image 104 and the template image 105 can be determined. For example, the correlation coefficient representing the matching degree between the projection image 104 and the template image 105 can be determined by averaging, summing, or weighted summing the sub-correlation coefficients.

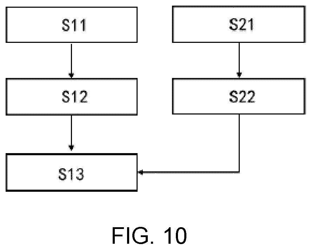

FIG. 9 schematically illustrates a scenario of calibration using the calibration method according to an exemplary example of the present disclosure. FIG. 10 schematically illustrates a flowchart of the calibration method for LIDAR 1 according to an exemplary example of the present disclosure.

As shown in FIG. 9, the LIDAR 1 is, for example, mounted on a vehicle. The vehicle is also equipped with an additional sensor 4. The additional sensor 4 may include additional LIDAR 1, radar, or camera, etc. According to an exemplary example of the calibration method of the present disclosure, it can be used to achieve joint calibration between the LIDAR 1 and the additional sensor 4. For this purpose, the calibration board 2 can be placed in the overlapping region of the field of view of the LIDAR 1 and the field of view of the additional sensor 4.

As shown in FIG. 10, in addition to steps S11, S12, and S13, the calibration method may also include steps S21 and S22.

In step S21, detection data detected by the additional sensor 4 for the calibration board 2 can be obtained. As shown in FIG. 9, the additional sensor 4 and the LIDAR 1 can be installed on the same vehicle, for example. The detection data and point cloud data measured by the additional sensor 4 and the LIDAR 1 can be transmitted to the calibration apparatus 3. For example, the calibration apparatus 3 can be configured to communicate with the additional sensor 4 and the LIDAR 1 to enable the transmission of data and/or control commands. The calibration apparatus 3 can be configured as a separate device relative to the vehicle. The detection data and point cloud data measured by the additional sensor 4 and the LIDAR 1 can also be transmitted to the calibration apparatus 3 via a data carrier. Optionally, the calibration apparatus 3 can also be installed on the vehicle.

The additional sensor 4 can particularly be a camera. The camera can capture the object under test and provide image data of the object under test, which may include static images and/or videos. By using the camera to detect the calibration board 2, image data of the calibration board 2 can be obtained.

In step S22, based on the detection data, a second transformation matrix between the sensor coordinate system of the additional sensor 4 and the calibration board coordinate system can be determined. The second transformation matrix can include information about the second rotation matrix and the second translation vector.

It should be understood that steps S21 and S22 can be performed before, after, or simultaneously with step S11, step S12, and/or step S13.

In one exemplary example, particularly when the additional sensor 4 is a camera, the second transformation matrix between the sensor coordinate system of the additional sensor 4 and the calibration board coordinate system can be determined based on the Perspective-n-Point (PnP) method.

By using the image data of the calibration board 2 captured by the camera, the two-dimensional image coordinates of the calibration points on the calibration board 2 in the image coordinate system can be determined. For example, the two-dimensional image coordinates of the calibration points in the image coordinate system can be represented as: $p_c$=[u, v, 1]$^T$. As an example, the corner points in the checkerboard pattern on the calibration board 2 can be selected as the calibration points. Particularly, more than six calibration points can be selected.

Since the size of the calibration board 2 and the calibration pattern 21 are known, the three-dimensional coordinates of the calibration points in the calibration board coordinate system can be determined. The three-dimensional coordinates of the calibration points in the calibration board coordinate system can be represented as: $p_b$ = [x, y, z, 1]$^T$.

The two-dimensional image coordinates of the calibration points and the three-dimensional positions of the calibration points in the calibration board coordinate system follow the perspective projection model. For example, $p_c$ and $p_b$ satisfy the following formula:

$$Zp_c = K[R_2, t_2]p_b$$

where K is the intrinsic parameter matrix of the camera, Z represents the scaling factor, $R_2$ and $t_2$ represent the rotation matrix and translation vector of the camera coordinate system relative to the calibration board coordinate system, i.e., the second rotation matrix and the second translation vector. Thus, the second transformation matrix can be determined. The second transformation matrix can be represented as: $T_{PnP} = [R_2, t_2]$.

Then, in step S13, based on the first transformation matrix and the second transformation matrix, a third transformation matrix between the LIDAR 1 and the additional sensor 4 can be determined as the calibration parameter. The third transformation matrix can be represented by the following formula:

$$^C T_L = T_{PnP} \cdot {}^L T_b^T$$

Using the third transformation matrix, joint calibration between the LIDAR 1 and the additional sensor 4 can be achieved.

It should be understood that in describing the exemplary examples, the calibration method or calibration process may be described in a specific step order in the specification, or the flowchart may present the calibration method or calibration process in a specific step order. However, where the calibration method or calibration process does not depend on the specific order of steps described herein, the calibration method or calibration process should not be limited to the specific order of steps described. As those skilled in the art will understand, other step orders are also possible. Therefore, the specific order of steps set forth in the specification should not be construed as limiting the claims. Additionally, the claims for the calibration method or calibration process should not be limited to performing their steps in the order written; those skilled in the art can easily understand that these orders can vary and still fall within the scope of the present application.

The calibration method of the present disclosure can be implemented by hardware or by executing corresponding software with hardware. The present disclosure also relates to a computer program product comprising computer program instructions, which, when executed by one or more processors, enable the processor to perform the calibration method according to the present disclosure. The computer program instructions can be stored in a computer-readable storage medium. The computer-readable storage medium may include, for example, portable computer disks, hard disks, random access memory (RAM), read-only memory (ROM), erasable programmable read-only memory, optical storage devices, magnetic storage devices, or any suitable combination thereof. The processor can be, for example, a central processing unit (CPU), or other general-purpose processors, digital signal processors (DSP), application-specific integrated circuits (ASIC), field-programmable gate arrays (FPGA), etc.

Although specific embodiments of the present invention have been described in detail here, they are provided solely for explanatory purposes and should not be construed as limiting the scope of the invention. Various substitutions, alterations, and modifications can be conceived without departing from the spirit and scope of the present disclosure. The features of various examples may be separated or combined to form additional examples not explicitly described or illustrated herein, which still fall within the scope of protection of the present disclosure.

**Claims**

1. A calibration method for a LiDAR, wherein the calibration method comprises the following steps:

   S11, obtaining point cloud data regarding a point cloud detected by the LiDAR (1) for a calibration board (2), wherein a main plane of the calibration board (2) has a calibration pattern (21) and faces the LiDAR (1);
   S12, based on the point cloud data, determining initial pose information of the calibration board (2) in the LiDAR coordinate system;
   S13, correcting the initial pose information using the calibration pattern (21) and the intensity information of the point cloud data to determine a first transformation matrix between the LiDAR coordinate system and the calibration board coordinate system, and determining calibration parameters for the LiDAR (1) based on the first transformation matrix.

2. The calibration method for a LiDAR according to Claim 1, wherein:
   Step S13 comprises:

   S131, projecting the point cloud representing the calibration board (2) along a main direction perpendicular to the main plane of the calibration board (2) as determined by the initial pose information using the intensity information of the point cloud data to generate a projection image (104); and
   S132, performing image matching between the projection image (104) and a template image (105) of the calibration pattern (21) and correcting the initial pose information based on the matching result of the image matching to determine the first transformation matrix between the LiDAR coordinate system and the calibration board coordinate system.

3. The calibration method for a LiDAR according to Claim 2, wherein:
   in step S131, points in the point cloud representing the calibration board (2) with lower intensity correspond to image units with lower brightness or higher grayscale values in the projection image (104), and points in the point cloud representing the calibration board (2) with higher intensity correspond to image units with higher brightness or lower grayscale values in the projection image (104).

4. The calibration method for a LiDAR according to Claim 2 or 3, wherein:

in step S132, a relative pose between the projection image (104) and the template image (105) is determined by performing image matching between the projection image (104) and the template image (105) of the calibration pattern (21), and the initial pose information is corrected using the relative pose between the projection image (104) and the template image (105).

5. The calibration method for a LiDAR according to any one of Claims 2-4, wherein:
in step S132, the image matching between the projection image (104) and the template image (105) of the calibration pattern (21) is performed using at least one of the following methods:

performing image matching between the projection image (104) and the template image (105) of the calibration pattern (21) using a normalized cross-correlation matching method; and/or
matching at least two image portions with different grayscale values in the projection image (104) and the template image (105) respectively to determine at least two corresponding sub-correlation coefficients between the projection image (104) and the at least two image portions, and determining a correlation coefficient representing the matching degree between the projection image (104) and the template image (105) based on the at least two sub-correlation coefficients; and/or
rotating the template image (105) within its image plane, performing image matching between the projection image (104) and the rotated template image (106) to determine the rotation angle of the template image (105) with the highest matching degree with the projection image (104), and determining the relative pose between the projection image (104) and the template image (105) based on the rotation angle.

6. The calibration method for a LiDAR according to any one of Claims 1-5, wherein:
in step S11, the initial point cloud detected by the LiDAR (1) is segmented to obtain at least one candidate point cloud cluster (101), and a target point cloud cluster (102) corresponding to the calibration board (2) is selected from the at least one candidate point cloud cluster (101), wherein:

the point cloud points in each candidate point cloud cluster (101) are divided into at least two groups according to the intensity information, and the target point cloud cluster (102) is selected based on the ratio of the number of point cloud points in the at least two groups; and/or
the target point cloud cluster (102) is selected based on the ratio of the dimensions of the bounding box of each candidate point cloud cluster (101) in at least two different directions.

7. The calibration method for a LiDAR according to Claim 6, wherein:
in the case where the calibration pattern (21) is a checkerboard pattern, the selected target point cloud cluster (102) at least meets the following conditions:
the point cloud points in the point cloud cluster are divided into a high-intensity group and a low-intensity group according to the intensity information, and the ratio of the number of point cloud points in the high-intensity group to the low-intensity group is between 0.5 and 2.

8. The calibration method for a LiDAR according to Claim 6 or 7, wherein:
in step S11, oriented bounding boxes of each candidate point cloud cluster (101) are obtained, wherein the selected target point cloud cluster (102) at least meets one of the following conditions:

the ratio of the minimum edge length to the maximum edge length of the oriented bounding box of the target point cloud cluster (102) is less than 0.1;
one of the three edge lengths of the oriented bounding box of the target point cloud cluster (102) is less than one-tenth of the other two edge lengths.

9. The calibration method for a LiDAR according to any one of Claims 1-8, wherein:
in step S12, the initial pose information of the calibration board (2) in the LiDAR coordinate system is determined based on the oriented bounding box of the point cloud representing the calibration board (2).

10. The calibration method for a LiDAR according to any one of Claims 1-9, wherein:

the LiDAR (1) is a non-repetitive scanning LiDAR; and/or
the calibration pattern (21) is a checkerboard pattern.

11. The calibration method for a LiDAR according to any one of Claims 1-10, wherein:

the calibration method further comprises the following steps: S21, obtaining detection data of additional sensor (4) for the calibration board (2); S22, based on the detection data, determining a second transformation matrix between the sensor coordinate system of the additional sensor (4) and the calibration board coordinate system; in step S13, determining a third transformation matrix between the LiDAR (1) and the additional sensor (4) as calibration parameters based on the first transformation matrix and the second transformation matrix.

12. The calibration method for a LiDAR according to Claim 11, wherein:

the additional sensor (4) is a camera; and/or
in step S22, the second transformation matrix between the sensor coordinate system of the additional sensor (4) and the calibration board coordinate system is determined based on the perspective-n-point method.

13. A calibration apparatus for a LiDAR, wherein the calibration apparatus (3) comprises:

one or more processors (31); and
a memory (32) storing computer program instructions, wherein the computer program instructions, when executed by the one or more processors (31), cause the one or more processors (31) to perform the calibration method according to any one of Claims 1-12.

14. A computer-readable storage medium storing computer program instructions, wherein the computer program instructions, when executed by one or more processors, cause the one or more processors to perform the calibration method according to any one of Claims 1-12.

FIG. 1

FIG. 2

FIG. 3

FIG. 4

FIG. 5

FIG. 6

FIG. 7

FIG. 8

FIG. 9

FIG. 10

Europäisches
Patentamt
European
Patent Office
Office européen
des brevets

# EUROPEAN SEARCH REPORT

**Application Number**

EP 24 18 8513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 766 758 A (ZHEJIANG DAHUA TECHNOLOGY CO) 7 February 2020 (2020-02-07) * paragraphs [0042] - [0056], [0218] * | 1-14 | INV. G01S7/497 G01S17/931 |
| A | WO 2023/027268 A1 (KOREA INST OF ROBOT AND CONVERGENCE [KR]) 2 March 2023 (2023-03-02) * the whole document * | 1-14 | |
| A | US 2021/316669 A1 (WANG YONGJUN [US]) 14 October 2021 (2021-10-14) * paragraphs [0052] - [0108], [0161] * | 1-14 | |

**TECHNICAL FIELDS SEARCHED (IPC)**

G01S

The present search report has been drawn up for all claims

| Place of search | Date of completion of the search | Examiner |
|---|---|---|
| Munich | 26 November 2024 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8513

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | | Publication date | Patent family member(s) | | Publication date |
|---|---|---|---|---|---|
| CN 110766758 | A | 07-02-2020 | NONE | | |
| WO 2023027268 | A1 | 02-03-2023 | KR | 20230030955 A | 07-03-2023 |
| | | | WO | 2023027268 A1 | 02-03-2023 |
| US 2021316669 | A1 | 14-10-2021 | US | 2021316669 A1 | 14-10-2021 |
| | | | US | 2022402444 A1 | 22-12-2022 |

For more details about this annex : see Official Journal of the European Patent Office, No. 12/82